# EUROPEAN PATENT APPLICATION

(11) **EP 3 597 715 A1**
(43) Date of publication of application: **22.01.2020**
(21) Application number: 18767858.6
(22) Date of filing: 15.03.2018
(51) Int. Cl.: C09J 7/38, C09D 5/00, C09D 109/02, C09J 7/24, C09J 7/50, C09J 11/04, C09J 11/06, C09J 107/00, H01B 7/00, H01B 7/18

(54) **ADHESIVE SHEET, PROTECTIVE MATERIAL AND WIRING HARNESS**

(30) Priority: 15.03.2017 JP 2017049297
(71) Applicant: Denka Company Limited, Tokyo 103-8338 (JP)
(72) Inventor: YOKOZUKA Manabu, Ichihara-shi Chiba 290-8588 (JP); HASUMI Mizuki, Ichihara-shi Chiba 290-8588 (JP); KUME Manabu, Yokkaichi-shi Mie 510-8503 (JP); IDE Takashi, Yokkaichi-shi Mie 510-8503 (JP)
(74) Representative: Beckmann, Claus
(86) International application number: PCT/JP2018/010175
(87) International publication number: WO 2018/168990

(57) **Abstract**

[Problem] Provided are an adhesive sheet capable of bonding adhesive layers together at normal temperatures, a protective material using said adhesive sheet, and a wire harness.

[Solution] Provided is an adhesive sheet comprising a substrate and adhesive layers that are arranged on one surface of the substrate with a primer layer being interposed therebetween,
wherein the adhesive layers comprise a natural rubber (A) and a tackifier (B),
the adhesive sheet has a volume resistivity of 1×10¹⁰ Ω cm or more and a tensile modulus at 100% elongation of 50 MPa or less as determined in accordance with JIS K 6251,
the adhesive layers have a probe tack of 10N/cm² or less as determined in accordance with ASTM D 2979,
the adhesive force between the adhesive layers having a width of 15 mm is 1.5 N or more,
and the adhesive force between the substrate and the adhesive layers having a width of 15 mm is 1.5 N or less.

## Description

### TECHNICAL FIELD

The present invention relates to an adhesive sheet, a protective material, and a wire harness.

### BACKGROUND ART

Wire harnesses comprising a plurality of electric wire groups arranged in an automobile often bundle the wire groups and are wound with tape for protection. Such tapes need insulative properties, softness and stretchability, and in addition, in accordance with their application and place of use, said tapes need heat resistance and cold resistance. However, in recent years, with the reduction of man-hour labor and the integration of parts, increasingly, one type of sheet is affixed all at once to the electric wire groups, thus both bundling and protecting the electric wires.

As a sheet for bundling and protecting electric wires, sheets having a dual-surface adhesive tape on one surface of a substrate are known. Such dual-surface adhesive tapes use adhesives such as those disclosed in Patent Document 1 and Patent Document 2, for example. Sheets employing such a dual-surface adhesive tape can bundle and protect the electric wires by bonding adhesive layers formed with the dual-surface adhesive tape with a sheet substrate. Such a dual-surface adhesive tape is often provided with a release paper in order to prevent adhesion between the adhesive layers and the substrate before use. Although it is necessary to peel off the release paper at the time of use, the operation to peel off the release paper takes time, and there is the problem that the release paper after peeling off generates waste. Therefore, as an adhesive sheet that does not use release paper, sheets having adhesive layers that are fused by heat (Patent Document 3) and sheets in which adhesive layers are bonded to each other with pressure sensitive adhesives (Patent Documents 4 and 5) are known.

### PRIOR ART DOCUMENTS

### PATENT DOCUMENTS

Patent Document 1 : JP 2011-104840 A
Patent Document 2 : JP 2001-348547 A
Patent Document 3 : JP H11-7856 A
Patent Document 4 : JP 2013-168322 A
Patent Document 5: JP 2016-056270 A

### SUMMARY OF THE INVENTION

### TECHNICAL PROBLEM

However, in the method described in Patent Document 3, crimping work with a heat fusion machine arises, and the time for this work is long and mistakenly contacting the electric wires with a heat source can cause trouble such as the electric wires breaking. Further, in the methods described in Patent Documents 4 and 5, bonding at normal temperatures is possible, but in the method described in Patent Document 4, the adhesive sticks to the hands of workers or to other electric wires, causing problems with working properties. In addition, with the method described in Patent Document 5, the adhesive force between the adhesive layers is insufficient, and peeling after bundling of the electric wires may occur.

The present invention, in view of the abovementioned circumstances, endeavors to provide an adhesive sheet capable of bonding adhesive layers together at normal temperatures, a protective material using said adhesive sheet, and a wire harness.

### SOLUTION TO THE PROBLEM

That is, the adhesive sheet, the protective material, and the wire harness according to the present invention are as follows.
(1) An adhesive sheet comprising: a substrate and adhesive layers that are arranged on one surface of the substrate with a primer layer being interposed therebetween; wherein the adhesive layers comprise a natural rubber (A) and a tackifier (B), the adhesive sheet has a volume resistivity of 1×10¹⁰ Ω cm or more and a tensile modulus at 100% elongation of 50 MPa or less as determined in accordance with JIS K 6251, the adhesive layers have a probe tack of 10N/cm² or less as determined in accordance with ASTM D 2979, the adhesive force between the adhesive layers having a width of 15 mm is 1.5 N or more, and the adhesive force between the other surface of the substrate and the adhesive layers having a width of 15 mm is 1.5 N or less.
(2) The adhesive sheet according to (1), wherein the adhesive layers comprise microparticles (C).
(3) The adhesive sheet according to (1) or (2), wherein the adhesive layers comprise the natural rubber (A) at 25 mass% or more and 75 mass% or less and the tackifier (B) at 75 mass% or more and 25 mass% or less.
(4) The adhesive sheet according to (2) or (3), wherein the adhesive layers comprise the microparticles (C) at an amount exceeding 0 mass% and 50 mass% or less.
(5) The adhesive sheet according to any one of (1)-(4), wherein the tackifier (B) comprises a resin with a phenol structure and/or a coumarone structure.
(6) The adhesive sheet according to any of (1)-(5), wherein the primer layer comprises acrylonitrile-butadiene rubber.
(7) The adhesive sheet according to any one of (2)-(6), wherein the average particle size of the microparticles (C) is 0.1 µm-20 µm.
(8) The adhesive sheet according to any one of (2)-(7), wherein the microparticles (C) are calcium carbonate.
(9) The adhesive sheet according any one of (1)-(8), wherein the heat shrinkage rate as determined in accordance with JIS K 7133 at 120°C is 20% or less.
(10) The adhesive sheet according to any one of (1)-(9), wherein a brittle temperature as determined in accordance with JIS K 7216 is -20°C or less.
(11) The adhesive sheet according to any one of (1)-(10), wherein the substrate includes one or more selected from polyvinyl chloride (PVC), an ethylene-vinyl acetate copolymer (EVA), an ethylene-propylene copolymer, an ethylene-methyl methacrylate copolymer (EMMA), low-density polyethylene (LDPE), and a styrene-ethylene-butylene-styrene copolymer (SEBS).
(12) A protective material for an elongated article, the protective material comprising the adhesive sheet according to any one of (1)-(11).
(13) The protective material according to (12), wherein the elongated article is a bundle of electric wires.
(14) A wire harness wherein a bundle of electric wires is bundled by making use of the adhesive sheet according to any one of (1)-(11).

### EFFECTS OF THE INVENTION

The present invention makes it possible to provide an adhesive sheet capable of bonding adhesive layers together at normal temperatures, a protective material using said adhesive sheet, and a wire harness.

### EMBODIMENTS FOR CARRYING OUT THE INVENTION

One embodiment of the present invention shall be explained in detail below. The present invention is not limited to the following embodiment and can be carried out with appropriate modifications so long as the effects of the present invention are not hindered.

### [Adhesive Sheet]

The adhesive sheet according to the present embodiment (hereinafter referred to simply as "adhesive sheet") comprises a substrate and adhesive layers that are arranged on one surface of the substrate with a primer layer being interposed therebetween. "One surface" means a main surface of either the front or rear of the substrate having a sheet-like shape. That is, the adhesive sheet is such that the substrate, the primer layer, and the adhesive layers are formed in this order. This adhesive sheet comprises adhesive layers capable of bonding at normal temperatures, is superior in working properties because there is little sticking thereof to workers and electric wires, and does not peel easily when bundling the electric wires because the adhesive layers are strongly bonded.

### <Substrate>

The substrate must have electrical insulative properties and softness, and being superior in heat resistance and cold resistance is preferable for the purpose of bundling and protecting elongated articles such as electric wires. In addition, from the viewpoint of molding workability, it is desirable for the substrate to comprise a thermoplastic resin. Examples of the resin forming the substrate, while there are no particular limitations, include polyolefin-based resin, vinyl chloride-based resin, natural rubber or synthetic rubber, and a thermoplastic elastomer.

Examples of the polyolefin-based resin include a copolymer of *α*-olefin (propylene, 1-butene, 1-pentene, 1-hexene, 1-octane, etc.) and a low-density polyethylene (LDPE), a medium-density polyethylene (MDPE), a high-density polyethylene (HDPE), and a linear low-density polyethylene (LLDPE), a copolymer of propylene and *α*-olefin (1-butene, 1-pentene, 1-hexene, 1-octane, etc.), an ethylene-propylene-diene copolymer, an ethylene-vinyl acetate copolymer (EVA), which is an ethylene-vinyl carboxylate copolymer, an ethylene-vinyl propionate copolymer, an ethylene-vinyl pivalic acid copolymer, an ethylene-vinyl caproate copolymer, an ethylene-vinyl caprate copolymer, an ethylene-vinyl laurate copolymer, an ethylene-ethyl (meth) acrylate copolymer, which is an ethylene-(meth) acrylic acid ester copolymer, an ethylene-methyl (meth) acrylate copolymer, an ethylene-propyl (meth) acrylate copolymer, a polypropylene homopolymer, which is a polypropylene-based resin, a polypropylene random copolymer, which is a propylene-ethylene copolymer, a polypropylene block polymer, a polypropylene block polymer obtained by polymerizing polypropylene and CH₂=CHR (R: aliphatic group having 2 to 8 carbon atoms and an aromatic group), ethylene-propylene rubber (EPR) having polypropylene as a hard segment, ethylene-propylene diene rubber (EPDM), acrylonitrile-butadiene rubber (NBR), a polypropylene polymer melt-kneaded and reactor-polymerized using natural rubber, etc. as a soft segment (TPO), a styrene-ethylene-propylene block and/or random copolymer (SEPS), which is an aromatic vinyl-based elastomer, a styrene-butadiene-styrene block and/or random copolymer (SBS), a styrene-isoprene-styrene block and/or random copolymer (SIS), and hydrogen added products thereof (for example, styrene-ethylene-butylene-styrene copolymer (SEBS)). Examples of the vinyl chloride-based resin include polyvinyl chloride, a vinyl chloride-vinyl acetate copolymer, a vinyl chloride-ethylene copolymer, a vinyl chloride-propylene copolymer, chlorinated polyolefin.

Examples of the synthetic rubber include butadiene rubber, isoprene rubber, styrene-butadiene rubber, acrylonitrile-butadiene rubber, methyl methacrylate-butadiene rubber, butyl rubber, chloroprene rubber, acrylic rubber, urethane rubber, silicone rubber, and the like. As a thermoplastic elastomer, examples include an ethylene-propylene copolymer, ethylene-propylene rubber, ethylene-propylene-diene rubber, and styrene-based thermoplastic elastomers such as a styrene-butadiene-styrene block copolymer, a styrene-isoprene-styrene block copolymer, a styrene-ethylene-styrene copolymer, a styrene-ethylene-butadiene-styrene copolymer, and a styrene-ethylene-propylene-styrene copolymer.

These can be selected and used individually or two or more can be selected and used. Of these, polyolefin-based resins, vinyl chloride-based resins, and styrene-based thermoplastic elastomers are preferable because they have softness and stretchability and are superior in molding workability, and one or more selected from vinyl chloride-based resins (polyvinyl chloride (PVC)), an ethylene-vinyl acetate copolymer (EVA), an ethylene-propylene copolymer, an ethylene-methyl methacrylate copolymer (EMMA), low-density polyethylene (LDPE), and a styrene-ethylene-butylene-styrene copolymer (SEBS) is/are more preferable, and vinyl chloride-based resins (polyvinyl chloride (PVC)), an ethylene-vinyl acetate copolymer (EVA), and an ethylene-propylene copolymer are even more preferable, and vinyl chloride-based resins (polyvinyl chloride (PVC)) are particularly preferable.

The vinyl chloride-based resin may be a homopolymer comprising only a vinyl chloride monomer, or a copolymer obtained by copolymerizing other monomers such as ethylene and vinyl acetate as described above. In addition, the degree of polymerization of the vinyl chloride-based resin is not particularly limited, but particularly good workability can be obtained by using an average degree of polymerization of 500-4000, more preferably 800-3000, and still more preferably 1000-2000.

The substrate can include a plasticizer to impart softness, stretchability, and workability. As a plasticizer, a phthalic acid-based plasticizer, an isophthalic acid-based plasticizer, a terephthalic acid-based plasticizer, an adipic acid-based plasticizer, and polyester-based plasticizers thereof, a phosphoric acid-based plasticizer, a trimellitic acid-based plasticizer, and an epoxy-based plasticizer etc. can be used. Specific examples of the plasticizer include DINP (diisononyl phthalate), DHP (diheptyl phthalate), DOP (bis (2-ethylhexyl) phthalate), n-DOP (di-n-octyl phthalate), DIDP (diisodecyl phthalate), DOIP (bis)2-ethylhexyl) isophthalate), DOTP (bis (2-ethylhexyl) terephthalate), BBP (benzyl butyl phthalate), TOTM (tris (2-ethylhexyl)) trimellitate), trioctyl trimellitate, DOA (bis (2-ethylhexyl) adipate), TCP (tricresyl phosphate), BOA (benzyl octyl adipate), polyesters (adipic acid-propylene glycol-based polyester, adipic acid-butylene glycol-based polyester, phthalic acid-propylene glycol-based polyester), DPCP (diphenyl cresyl phosphate), diisodecyl adipate, epoxidized soybean oil, epoxidized linseed oil, and chlorinated paraffin. These can be selected and used individually or two or more can be selected and used. Preferably, DINP, DOTP, TOTM, DOA, polyesters, epoxidized soybean oil, epoxidized linseed oil, and chlorinated paraffin are employed, and DINP is more preferable. Concerning the included amount of the plasticizer, while there are no particular limitations, it is possible to set 20 parts by mass or more and 60 parts by mass or less with respect to 100 parts by mass of the abovementioned resin, for example.

The substrate, as needed and without hindering the effects of the present invention, can be blended with an inorganic filler, a reforming agent, and, as other additives thereof, a coloring agent, a stabilizer, an anti-oxidation agent, an ultraviolet light absorbing agent, and a lubricant etc.

Examples of the inorganic filler include an aluminum hydroxide, a magnesium hydroxide, a zirconium hydroxide, a calcium hydroxide, a potassium hydroxide, a barium hydroxide, a triphenyl phosphate, an ammonium polyphosphate, a polyphosphoric acid amide, a zirconium oxide, a magnesium oxide, a zinc oxide, a titanium oxide, a molybdenum oxide, a guanidine phosphate, a hydrotalcite, smectite, a zinc borate, an anhydrous zinc borate, a zinc metaborate, a barium metaborate, an antimony oxide, an antimony trioxide, an antimony pentaoxide, red phosphorus, talc, alumina, silica, boehmite, bentonite, sodium silicate, calcium silicate, calcium sulfate, calcium carbonate, magnesium carbonate, and carbon black, and these can be selected and used individually or two or more can be selected and used. Preferably, talc, alumina, silica, calcium silicate, calcium sulfate, calcium carbonate, and magnesium carbonate are employed, and more preferably, calcium carbonate is employed.

The inorganic filler can be obtained by pulverizing a natural product or may be one obtained by neutralizing and precipitating an aqueous solution or the like. In addition, it is also possible to introduce a functional group with a surface treatment agent and the like. As the surface treatment agent, a fatty acid, a rosin acid, a lignin acid, a quaternary ammonium salt, and the like can be used.

Examples of the reforming agent include, for example, an acrylonitrile-butadiene-styrene copolymer, a methyl methacrylate-butadiene-styrene copolymer, a methyl methacrylate-butyl acrylate copolymer, a thermoplastic polyurethane, and a polyester-based thermoplastic elastomer. These can be selected and used individually or two or more can be selected and used.

The included amounts of the inorganic filler, the reforming agent, and the other additives thereof are not particularly limited, but when including these, for example, it is possible to set this at an amount exceeding 0 parts by mass and 50 parts by mass or less with respect to 100 parts by mass of the abovementioned resin.

The formation method of the substrate makes it possible to obtain a composition by mixing the resin, the plasticizer, the inorganic filler, a thermal stabilizer, a light absorbing agent, a pigment, and other additives thereof by melt kneading. While the melt kneading method is not particularly limited, various mixers and kneaders such as a twin-screw extruder, continuous and batch kneaders, rolls, and a Banbury mixer equipped with a heating device can be used, and the compositions are mixed to disperse uniformly, and the resulting mixture is molded into the substrate with a calendar method, a T-die method, and an inflation method and the like, which are conventional molding methods. The molding machine is preferably a calendar molding machine from the viewpoints of productivity, color change, and uniformity of shape. As a roll arrangement method in calendar molding, for example, a known type such as an L-type, an inverted L-type, or a Z-type can be adopted, and further, the roll temperature is normally set at 150°C-200°C, and preferably at 155°C-190°C.

There is a variety of thicknesses of the substrate that is possible in accordance with the purpose of use and the application thereof, and preferably is 30 µm-2000 µm, more preferably 100 µm-1000 µm, and even more preferably 200 µm -500 µm.

### <Adhesive Layers>

The adhesive layers comprise a natural rubber (A) and a tackifier (B). By comprising the natural rubber (A), after bonding the adhesive layers together, by applying slight pressure by pressing with one's hand, it is possible to bond the adhesive layers together as a pressure-sensitive adhesive and a drop in the adhesive force due to leakage of the plasticizer from the substrate does not readily occur. By comprising the tackifier (B), it is possible to further improve the adhesive force of the natural rubber.

The natural rubber (A) may be used as is as an unmodified natural rubber, and it is also possible to graft other monomers such as styrene, acrylonitrile, and methyl methacrylate, crosslink by adding a sulfur compound, an organic peroxide compound or the like, and depolymerize by masticating or with an organic peroxide treatment and the like and then use the rubber. Also, that which remains after removing impurities with centrifugal separation or a deproteinization agent treatment of latex may be used. These can be selected and used individually or two or more can be selected and used. The included amount of the natural rubber (A), in the adhesive layers, is preferably 20 mass% or more and 80 mass% or less, and more preferably 25 mass% or more and 75 mass% or less.

The adhesive layers may include synthetic rubber insofar as the adhesive performance explained below is not hindered. Specific examples of the synthetic rubber include butadiene rubber, isoprene rubber, styrene-butadiene rubber, acrylonitrile-butadiene rubber, methyl methacrylate-butadiene rubber, isobutylene rubber (butyl rubber), chloroprene rubber, thermoplastic elastomers (for example, ethylene-propylene rubber, ethylene-propylene-diene rubber, a styrene-butadiene-styrene block copolymer, a styrene-isoprene-styrene block copolymer, a styrene-ethylene-styrene copolymer, a styrene-ethylene-butadiene-styrene copolymer, and a styrene-ethylene-propylene-styrene copolymer, etc.), acrylic rubber, and urethane rubber. When including synthetic rubber, while the included amount thereof is not particularly limited, it can be set at an amount exceeding 0 parts by mass and 100 parts by mass or less with respect to 100 parts by mass of the natural rubber (A).

It is essential to design the tackifier (B) so that the adhesive layers satisfy the tack (probe tack), self-adhesive force (adhesive force of the adhesive layers), and back surface adhesive force (adhesive force between the adhesive layers and the substrate) to be explained below. The softening point of the tackifier (B), in a ring and ball method in accordance with JIS K 2207, is preferably 100°C-200°C, more preferably 120°C-180°C, and even more preferably 130°C-170°C. By setting the softening point of the tackifier (B) within this range, it is possible to form adhesive layers with a high self-adhesive force while suppressing a rise in the tack and the back surface adhesive force of the adhesive layers.

Examples of the tackifier (B) include, for example, a rosin resin and a hydrogenated rosin resin, a rosin ester resin, a rosin modified phenol resin, a phenol resin, an alkylphenol resin, a terpene resin, a terpene phenol resin, a coumarone resin, an indene resin, a coumarone-indene resin, a coumarone-indene-styrene resin, a styrene resin, a xylene resin, and a styrene-maleic acid resin. These can be selected and used individually or two or more can be selected and used. Preferably, resins having a phenol structure such as a phenol resin, an alkylphenol resin, a terpene phenol resin, a rosin modified phenol resin and resins having a coumarone structure such as a coumarone resin, a coumarone-indene resin, and a coumarone-indene-styrene resin are employed, and particularly preferable are rosin modified phenol resins, terpene phenol resins, coumarone-indene resins, and coumarone-indene-styrene resins. The included amount of the tackifier (B) can be set to 10 mass% or more and 80 mass% or less in the adhesive layers, and preferably is 25 mass% or more and 75 mass% or less.

The adhesive layers can include microparticles (C) as needed. The adhesive layers including microparticles (C) suppress the adhesive force with respect to adherents such as the electric wires while maintaining adhesive properties, and in addition, the blocking resistance properties with the substrate improve, which reduces the occurrence of movement (glue transfer) of the adhesive to the substrate surface when expanding that rolled up in the above roll shape. Specific examples of the microparticles include inorganic microparticles such as silica, talc, alumina, sodium silicate, calcium silicate, calcium sulfate, calcium carbonate, magnesium carbonate, magnesium oxide, zinc oxide, titanium oxide, boehmite, bentonite, and hydrotalcite, organic microparticles such as polypropylene, polymethyl methacrylate, polyester, and polyolefin, and inorganic-organic-compound microparticles. However, as incompatability with the natural rubber is preferable, inorganic microparticles are preferable, and silica, alumina, and calcium carbonate, which are superior in workability and safety, are more preferable, and calcium carbonate, which is also economically superior, is even more preferable. The microparticles may be used individually or two or more types thereof can be combined and used.

The average particle size of the microparticles (C) is preferably 0.01 µm or more and 30 µm or less, more preferably 0.1 µm or more and 20 µm or less, even more preferably 0.3 µm or more and 10 µm or less, and particularly preferably 0.5 µm or more and 5 µm or less. By setting the average particle size at 0.1 µm or more, it is possible to sufficiently obtain the blocking resistance property effects engendered by the microparticles, reducing the occurrence of glue transfer to the substrate surface. By setting the average particle size at 20 µm or less, the microparticles can suppress the hindrance of the bonding of the adhesive layers and it is possible to sufficiently express self-adhesive force. The average particle size means the average primary particle size, is a value measured by a laser diffraction/scattering type particle size distribution measurement method, and is a 50% integrated particle size in volume-based particle size distribution.

While the BET specific surface area of the microparticles (C) is not particularly limited, it is preferably 0.5 m²/g or more and 5 m²/g or less. By setting this at 0.5 m²/g or more, it is possible to prevent a drop in dispersibility to the natural rubber. By setting this at 5 m²/g or less, it is possible to reliably obtain the blocking resistance property effects of the microparticles. The BET specific surface area means the surface area per mass unit as determined by a BET method (a method for adsorbing gaseous particles such as nitrogen on solid particles and measuring the surface area from the adsorbed amount).

While the apparent specific gravity of the microparticles (C) is not particularly limited, in consideration of the dispersibility to water described previously, being less than 1 is preferable. In addition, the true specific gravity is not particularly limited.

Regarding the microparticles (C), in consideration of the dispersibility to the natural rubber and the tackifier, it is possible to perform a hydrophilizing or hydrophobing surface treatment, and it is also possible to use the microparticles as are. When including the microparticles (C), the included amount thereof is preferably an amount exceeding 0 mass% and 60 mass% or less or 50 mass% or less in the adhesive layers, and more preferably 10 mass% or more.

The formation method of the adhesive layers involves applying an adhesive solution, emulsion, or dispersion in which, for example, a surfactant, a viscosity modifier, an anti-aging agent, the plasticizer, a filler, and other additives thereof are mixed and which include the natural rubber (A), the tackifier (B), and the microparticles (C) as needed, on one surface of the substrate with the primer layer interposed therebetween, drying in a furnace, and thereafter obtaining said adhesive layers in a roll-shape with a roll-up method In addition, examples of the application method include a positive rotation roll method, a reverse roll method, a gravure roll method, a spray method, a kiss roll method, a bar method, a knife method, a comma method, and a lip die method. In addition, as an embodiment of the abovementioned adhesive, from the viewpoint of safety and ring and ball load, using an emulsion or dispersion with water is preferable.

The thickness of the adhesive layers, from the viewpoint of the expression of adhesive force and the structural maintenance of the adhesive layers, is preferably 5 µm -100 µm and more preferably 10 µm -50 µm. By setting the thickness of the adhesive layers to 5 µm or more, it is possible to sufficiently express the adhesive force. In addition, by setting the thickness of the adhesive layers to 100 µm or less, it is possible to sufficiently maintain the structure of the adhesive layers, so when peeling the sheet from the rolled object and employing the sheet, the occurrence of the phenomenon of the adhesive layers moving to the other substrate surface, the so-called glue transfer, can be prevented.

### <Primer Layer>

The adhesive sheet is provided with a primer layer between the substrate and the adhesive layers in order to increase the adhesion between the substrate and the adhesive layers.

Examples of the primer forming the primer layer include natural rubber, natural rubber grafted with other monomers such as styrene, acrylonitrile, and methyl methacrylate, butadiene rubber, isoprene rubber, styrene-butadiene rubber, acrylonitrile-butadiene rubber, methyl methacrylate-butadiene rubber, isobutylene rubber (butyl rubber), chloroprene rubber, thermoplastic elastomers (for example, ethylene-propylene rubber, ethylene-propylene-diene rubber, a styrene-butadiene-styrene block copolymer, a styrene-isoprene-styrene block copolymer, a styrene-ethylene-styrene copolymer, a styrene-ethylene-butadiene-styrene copolymer, and a styrene-ethylene-propylene-styrene copolymer), acrylic rubber, and urethane rubber, and these can be selected based on their properties for adhesion with the substrate and the adhesive.

Of these, from the superiority in compatibility with the adhesive including the natural rubber and the tackifier, the inclusion of one or more selected from natural rubber grafted with other monomers such as styrene, acrylonitrile, and methyl methacrylate, styrene-butadiene rubber, acrylonitrile-butadiene rubber, and methyl methacrylate-butadiene rubber is preferable, and the inclusion of acrylonitrile-butadiene rubber is particularly preferable.

The primer layer can include additives such as a surfactant, a viscosity modifier, an anti-aging agent, a plasticizer, and a filler insofar as the effects of the present invention are not hindered. When including additives, the included amount thereof is not particularly limited and can be set at an amount exceeding 0 mass% and 30 mass% or less in the primer layer.

A conventionally known method can be used as the method for forming the primer layer, and for example, on one surface of the substrate, the primer layer can be formed by means of a method for applying, such as a positive rotation roll method, a reverse roll method, a gravure roll method, a spray method, a kiss roll method, a bar method, a knife method, a comma method, and a lip die method.

The thickness of the primer layer is preferably 0.01 µm-10 µm and more preferably 0.1 µm-1 µm from the viewpoints of expressing the force for bonding the substrate and the adhesive, so-called anchoring properties, and maintaining the structure of the primer layer.

Concerning the adhesive sheet, adhesive layers and a back-surface treatment layer may be provided on the surface of the opposite side substrate in order to reduce the adhesion between the adhesive layers and the substrate of another adhesive sheet. The back-surface treatment layer can be formed by using polypropylene (PP), high-density polyethylene (HDPE), low-density polyethylene (LDPE), linear low-density polyethylene (LLDPE), an ethylene-propylene copolymer, polyacrylic ester, polymethacrylate, polyvinyl alcohol (PVA), an ethylene-vinyl alcohol copolymer, polyethylene glycol (PEG), polypropylene glycol (PPG), an ethylene glycol-propylene glycol copolymer, and polydimethylsiloxane (PDMS) etc.

### <Adhesive Sheet>

The adhesive sheet must have a tensile modulus at 100% elongation of 50 MPa or less as determined in accordance with JIS K 6251. The adhesive sheet preferably has a tensile modulus at 100% elongation of 2 MPa-30 MPa and more preferably 5 MPa-20 MPa. When it is higher than 50 MPa, deformation of the substrate is less likely to occur when the sheet is fed out, and when the electric wire groups are covered, the flexibility of the electric wire groups cannot be secured.

The adhesive sheet must have a volume resistivity of 1×10¹⁰ Ω cm or more, preferably 1×10¹¹ Ω cm or more, and more preferably 1×10¹² Ω cm or more. If the volume resistivity is less than the above value, peeling and the like of the electric wire covering occur after bundling the electric wires and there is the risk of electric conduction or damage to the insulative properties, rendering these unusable as a protective material of electric wires. In addition, the volume resistivity is a value measured in accordance with JIS K 6271.

The adhesive sheet preferably has a heat shrinkage rate at 120°C of 20% or less, more preferably 10% or less, and even more preferably 5% or less. By setting the heat shrinkage rate at 20% or less, it is possible to suppress the occurrence of peeling in high temperature environments after bundling the electric wires. In addition, the heat shrinkage rate is a value measured in accordance with JIS K 7133 at 120°C, in which the sheet film forming direction (MD) and perpendicular direction (TD) thereof are measured and the larger value is employed.

The adhesive sheet preferably has a brittle temperature in accordance with JIS K 7216 of -20°C or less, more preferably -30°C or less, and even more preferably -40°C or less. By setting the brittle temperature at -20°C or less, it is possible to suppress the occurrence of cracking in low temperature environments after bundling the electric wires.

The adhesive sheet is such that the adhesive force between the adhesive layers having a width of 15 mm is 1.5 N or more. If the value is less than this, peeling occurs when bundling and protecting elongated articles such as electric wires by bonding together the adhesive layers of the adhesive sheet, and it is not possible to satisfy performance as a protective material. The measurement method of the adhesive force is as described in the examples.

The adhesive sheet is such that the probe tack of the adhesive layers is 10 N/cm² or less. If this value is exceeded, when bundling and protecting elongated articles such as electric wires, sticking to the elongated articles occurs, leading to a drop in working efficiency. The probe tack is a value measured in accordance with ASTM D 2979.

The adhesive sheet is such that the adhesive force between the adhesive layers and the substrate (adhesive force between the adhesive layers and the surface opposing the surface on which the adhesive layers of the substrate are formed) having a width of 15 mm is 1.5 N or less. If this value is exceeded, the glue transfer to the substrate surface occurs, and this not only damages the external appearance, but also leads to a drop in working efficiency as the adhesive remaining on the side opposing the side protecting the electric wires and the like can adhere to other articles. The measurement method of the adhesive force is as described in the examples.

### [Articles]

The above-described adhesive sheet can be preferably used as a protective material of elongated articles. The articles according to the present embodiment are formed using the abovementioned adhesive sheet and are protective adhesive sheets which are for elongated articles and which comprise the adhesive sheet. An electric wire bundle can be provided as an example of the elongated articles. It is possible to form a wire harness by bundling the electric wire bundle by using the adhesive sheet according to the present embodiment.

### EXAMPLES

Examples and comparative examples more specifically explain the present invention below, but the present invention is not limited to these examples.

### [Example 1]

### (Manufacturing of the substrate)

A substrate was obtained having a thickness of 0.4 mm by blending, with respect to 100 parts by mass of polyvinyl chloride (TH-1000, manufactured by Taiyo Vinyl Corporation), 40 parts by mass of isononyl phthalate (manufactured by J-Plus Co., LTD), 20 parts by mass of a heavy calcium carbonate (Lighton BS-O, manufactured by Bihoku Funka Kogyo Co., Ltd.), a stabilizer, and a lubricant and then kneading and mixing for ten minutes with a twin-roll at a roll temperature of 165°C.

### (Manufacturing of the adhesive)

An emulsion adhesive was obtained by blending a natural rubber emulsion (HA LATEX, manufactured by Regitex Co., Ltd.), a rosin-modified phenol emulsion with a softening point of 170°C as a tackifier (Hariester SK-822E manufactured by Harima Chemicals Group Co., Ltd.), and a light calcium carbonate slurry as inorganic microparticles (particle size 1 µm, PCX-850, manufactured by Shiroishi Kogyo Co., Ltd.) so as to reach a solid content of 35 mass% of the natural rubber, 35 mass% of the tackifier, and 30 mass% of the inorganic microparticles, respectively, and stirred using a stirrer.

### (Manufacturing of the adhesive sheet)

On the surface of the abovementioned substrate, an acrylonitrile-butadiene rubber (NBR) (LX550L manufactured by Zeon Corporation) was applied and then, by drying for one minute at 100°C, a primer layer having a thickness of 0.3 µm was formed on the surface of the substrate.

Next, the emulsion adhesive was applied on the surface of the primer layer and then, by drying for one minute at 100°C using an oven, an adhesive sheet having a three-layered structure of a 0.4 mm thick substrate/0.3 µm thick primer layer/20 µm thick adhesive layers was obtained.

### [Example 2]

An adhesive sheet was obtained with a method the same as that of example 1 except that the tackifier in example 1 was changed to terpene phenol (softening point 150°C, Tamanol E-200-NT, manufactured by Arakawa Chemical Industries., Ltd.). The blending of the adhesive used in the examples and the comparative examples are shown in Tables 1-6.

### [Example 3]

An adhesive sheet was obtained with a method the same as that of example 1 except that the tackifier in example 1 was changed to a coumarone-indene resin (softening point: 120°C, V-120S, manufactured by Nitto Chemical Co., Ltd.).

### [Example 4]

An adhesive sheet was obtained with a method the same as that of example 1 except that the microparticles in example 1 were changed to calcium carbonate having a particle size of 0.08 µm (Neolite SP-100 manufactured by Takehara Kagaku Kogyo Co., Ltd.).

### [Example 5]

An adhesive sheet was obtained with a method the same as that of example 1 except that the microparticles in example 1 were changed to hydrophilic fumed silica having a particle size of 0.02 µm (AEROSIL 90 manufactured by Nippon Aerosil Co., Ltd.).

### [Example 6]

An adhesive sheet was obtained with a method the same as that of example 1 except that the microparticles in example 1 were changed to calcium carbonate having a particle size of 26.7 µm (FP-1300, Calfine Co., Ltd.).

### [Comparative Example 1]

An adhesive sheet was obtained with a method the same as that of example 1 except that the tackifier in example 1 was changed to C5C9 petroleum resin (softening point 100°C, emulsion AP1100 manufactured by Arakawa Chemical Industries., Ltd.).

### [Examples 7-9, 18-33 and Comparative Examples 6-11]

An adhesive sheet was obtained with a method the same as that of example 1 except that the composition of the adhesive layers used in examples 1-6 and comparative example 1 was changed.

### [Examples 10-11]

An adhesive sheet was obtained with a method the same as that of example 1 except that the thickness of the adhesive layers in example 1 was changed.

### [Examples 12-16 and Comparative Examples 1-4]

An adhesive sheet was obtained with a method the same as that of example 1 except that the composition of the substrate in example 1 was changed.

### [Example 17]

An adhesive sheet was obtained with a method the same as that of example 1 except that the primer in example 1 was changed to methyl methacrylate grafted rubber (MG50 manufactured by Regitex Corporation).

### [Comparative Example 5]

An adhesive sheet was obtained with a method the same as that of example 1 except that the adhesive layers were formed without applying the primer in example 1, but when rolling up into a roll shape and feeding out, the adhesive layers transferred to the back surface of the substrate, and it was not possible to evaluate comparative example 5 as an adhesive sheet with the evaluation below.

### [Evaluation]

Test pieces necessary for each evaluation were cut out from the adhesive sheet and the following physical properties were evaluated.

### <Volume Resistivity>

Volume resistivity of the adhesive sheet was measured in accordance with JIK K 6271. The results are shown in Tables 1-6.

### <Tensile modulus at 100% elongation>

In accordance with JIS K 6251, the stress at 100% elongation was measured when a test piece molded into a No. 3 dumbbell was subjected to a tensile test at 300 mm/min. The results are shown in Tables 1-6. In addition, when the elongation was less than 100%, it was described as "broken".

### <Heat Shrinkage Rate at 120°C>

In accordance with JIS K 7133, the dimensional change of the test piece before and after heating when the test piece was heated at 120°C for one hour was measured. As for the dimensions, the sheet film forming direction (MD) and the perpendicular direction (TD) thereof were measured, and the larger value was adopted. The results are shown in Tables 1-6.

### <Brittle Temperature>

In accordance with JIS K 7216, test pieces were stacked so as to be 38 mm long × 6 mm wide × 2 mm thick, left for three minutes in a test temperature environment, and the test pieces were examined for the presence or absence of damage when impact was applied with a striking hammer. The test temperature was lowered by increments of 2°C from 0°C, and the maximum temperature at which there was no damage was set as the brittle temperature. The results are shown in Tables 1-6.

### <Probe Tack>

In accordance with ASTM D 2979, using a probe tack tester (NS PROBE TACK TESTER, manufactured by Nichiban Co., Ltd.), a cylindrical probe with a diameter of 5 mm was brought into contact with the test pieces at a speed of 1 cm/s under a 23°C environment and then, the load at the time of peeling off at a speed of 1 cm/s was measured. The results are shown in Tables 1-6.

### <Adhesive force between the adhesive layers>

Two test pieces 15 mm wide x 120 mm long were prepared, the adhesive layers of the test pieces were bonded together in an area of 15 mm x 100 mm under an environment of 23°C, and after five cycles of 50 mm per second with a pressure roller having a load of 2 kg, the test pieces were left alone for 30 minutes. Next, the load at the time of peeling was measured for two test pieces at a load cell speed of 300 mm/min under an environment of 23°C. The peeling direction of the test pieces was set such that the angle formed by the two test pieces after peeling was 180°. The results are shown in Tables 1-6.

### <Adhesive force between the adhesive layers and the substrate>

Two test pieces 15 mm wide × 120 mm long were prepared, the adhesive layers of one test piece and the substrate surface of the other test piece were bonded under an environment of 23°C in an area of 15 mm × 100 mm, and after five cycles of 50 mm per second with a pressure roller having a load of 2 kg, the test pieces were left alone for 30 minutes. Next, the load at the time of peeling was measured for the two test pieces at a load cell speed of 300 mm/min under an environment of 23°C. The peeling direction of the test pieces was set such that the angle formed by the two test pieces after peeling was 180°. The results are shown in Tables 1-6.

### <Voltage resistance>

In accordance with IEC-60243-1, after a 2000 V, one minute application of a DC voltage, the presence or absence of insulative damage was determined with the following criteria. In addition, with an adhesive sheet with favorable voltage resistance, there is no risk of the occurrence of electric conduction or insulative damage when the electric wire covering peels off after bundling the electric wires, and thus, the adhesive sheet can be used preferably as a protective sheet for electric wires. The results are shown in Tables 1-6.
Good: No insulative damage
Poor: Insulative damage

### <Changes to the outer appearance of the roll form>

In an evaluation test room set to a temperature of 23 ± 2°C and a humidity of 50 ± 5% RH, an adhesive sheet 100 mm wide and 10 m long was rolled up in the form of a roll on a paper tube with an outer diameter of three inches, and after placement for one week, the outer appearance change of the roll form was visually observed and judged and determined according to the following criteria. The results are shown in Tables 1-6. In addition, it can be said that an adhesive sheet with a small change in the outer appearance of the roll form is easy for an operator to feed out from the roll shape, and is preferable as a protective sheet for electric wires.
Superior: No changes in outer appearance of the roll form.
Good: The sheet is too soft and deforms or the sheet is too hard and repulsive force occurs.
Poor: The sheet is too soft and deforms, there is width deviation and wrinkles and extrusion of the core part, or the sheet is too hard and repulsive force occurs and there is width deviation and unwinding.

### <Sticking to the back surface>

In an evaluation test room set to a temperature of 23 ± 2°C and a humidity of 50 ± 5% RH, an adhesive sheet 100 mm wide and 1 m long is rolled up in the form of a roll on a paper tube with an outer diameter of three inches, and after placement for one week, the outer appearance of the sheet when feeding out at a line speed of 1 m/min was visually observed and determined with the following criteria. The results are shown in Tables 1-6. In addition, with an adhesive sheet with little sticking to the back surface, even when supplied in the form of being rolled up in a roll form, an operator can effortlessly feed out and use the adhesive sheet preferably as a protective sheet of electric wires etc.
Superior: No adhesion to the substrate surface.
Good: While there is adhesion to the substrate surface, there is no glue transfer to the substrate surface.
Poor: Glue transfer to the substrate surface.

### <Sticking to the electric wires>

In an evaluation test room set to a temperature of 23 ± 2°C and a humidity of 50 ± 5% RH, 15 electric wires with a diameter of 1 mm and 200 mm long were bundled to form an electric wire bundle. In a center portion of the electric wire bundle, an adhesive sheet (100 mm long, 50 mm wide) was wound around one turn so that the width direction is perpendicular to the longitudinal direction of the electric wire bundle, and the adhesive surfaces were bonded at an area 100 mm long × 10 mm wide. Subsequently, the bonded part was crimped once with a roller having a 2 kg weight at a speed of 300 mm per minute. This was made into a protective material sample. This was set aside for 30 minutes and the presence or absence of sticking to the electric wire bundle of the adhesive surfaces was visually observed and judged and then determined according to the following criteria. The results are shown in Tables 1-6. In addition, with an adhesive sheet with little sticking to the electric wires, there are no occurrences of dropping working properties caused by unintentional adhesion to the electric wires when an operator winds around the electric wires and damage to the flexibility as an electric wire bundle caused by tightening the electric wires too strongly , so it is possible to use the adhesive sheet preferably as a protective sheet. Superior: Immediately after tightening, there is no adhesion to the electric wires.
Good: Immediately after tightening, while there is adhesion to the electric wires, there is peeling after tightening and setting aside for 30 minutes.
Poor: There is adhesion to the electric wires after tightening and setting aside for 30 minutes.

### <Peeling after mounting the electric wires>

Both ends of the electric wire bundle of the abovementioned protective material sample were fixed, placed in a suspended state, the state thereof after setting aside for five days was visually observed and judged and then determined in accordance with the following criteria. The results are shown in Tables 1-6.
Superior: The bonded part remains in a bonded state.
Good: Only a portion of the bonded part shows peeling.
Poor: The bonded part has peeled and the sheet has slipped off the electric wires.

### <Heat-resistance properties>

Both ends of the electric wires of the abovementioned protective material sample were fixed, placed in a suspended state, the state thereof after heating under an environment of 100°C for five days was visually observed and judged and then determined in accordance with the following criteria. The results are shown in Tables 1-6. Superior: The bonded part remains in a bonded state. Good: Only a portion of the bonded part shows peeling. Poor: The bonded part has peeled and the sheet has slipped off the electric wires.

### <Cold-resistance properties>

Both ends of the electric wires of the abovementioned protective material sample were fixed, were cooled under an environment of -20°C for five days and the electric wire bundle was folded in two around the center portion thereof and the subsequent outer appearance was visually observed and judged and then determined in accordance with the following criteria. The results are shown in Tables 1-6.
Superior: The bonded part remains in a bonded state.
Good: Only a portion of the bonded part shows peeling.
Poor: The bonded part has peeled and the sheet has slipped off the electric wires.

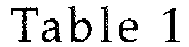

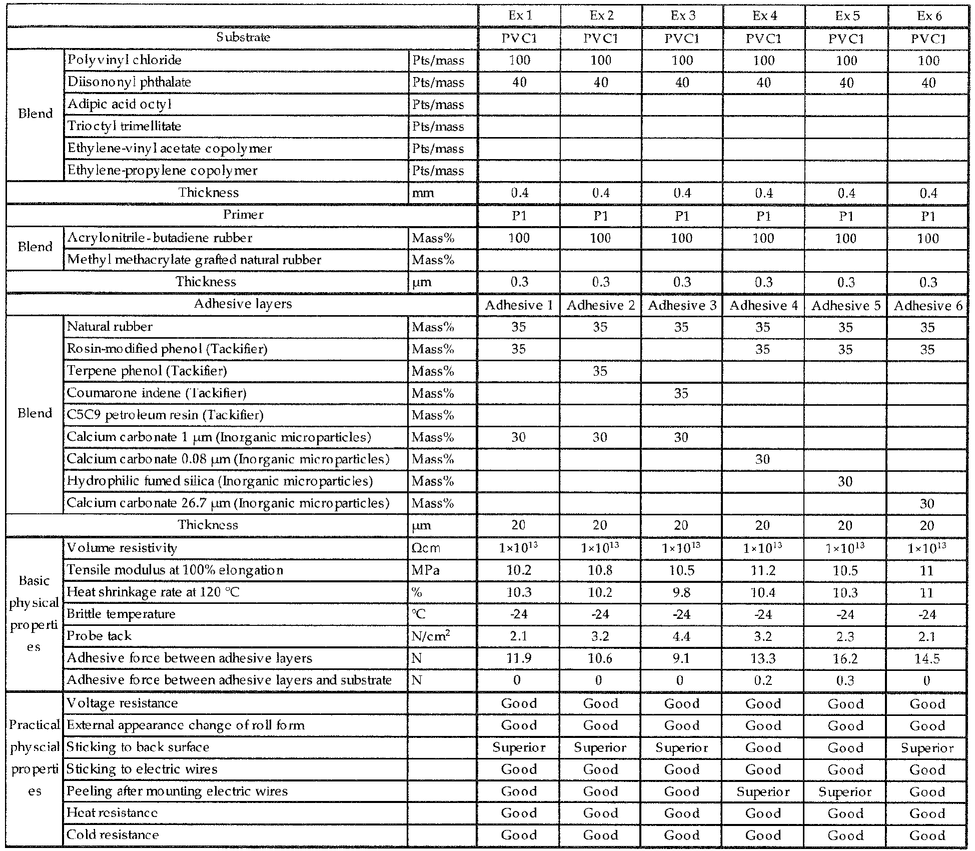

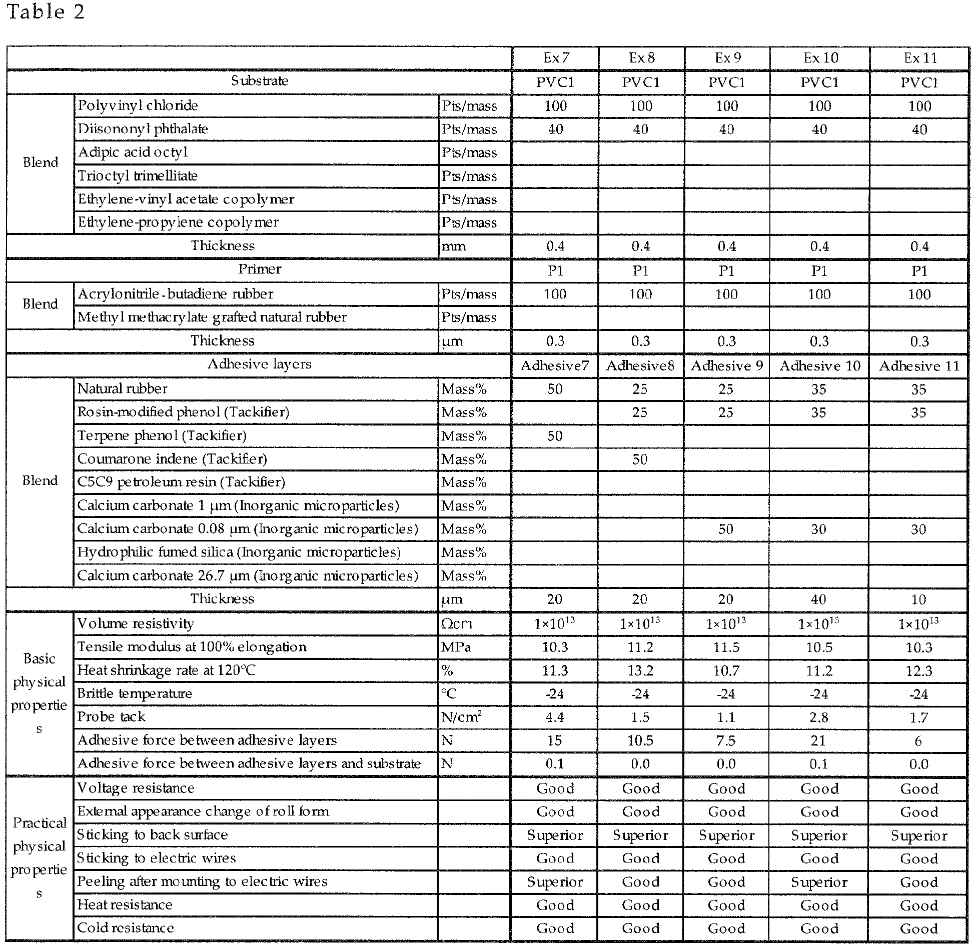

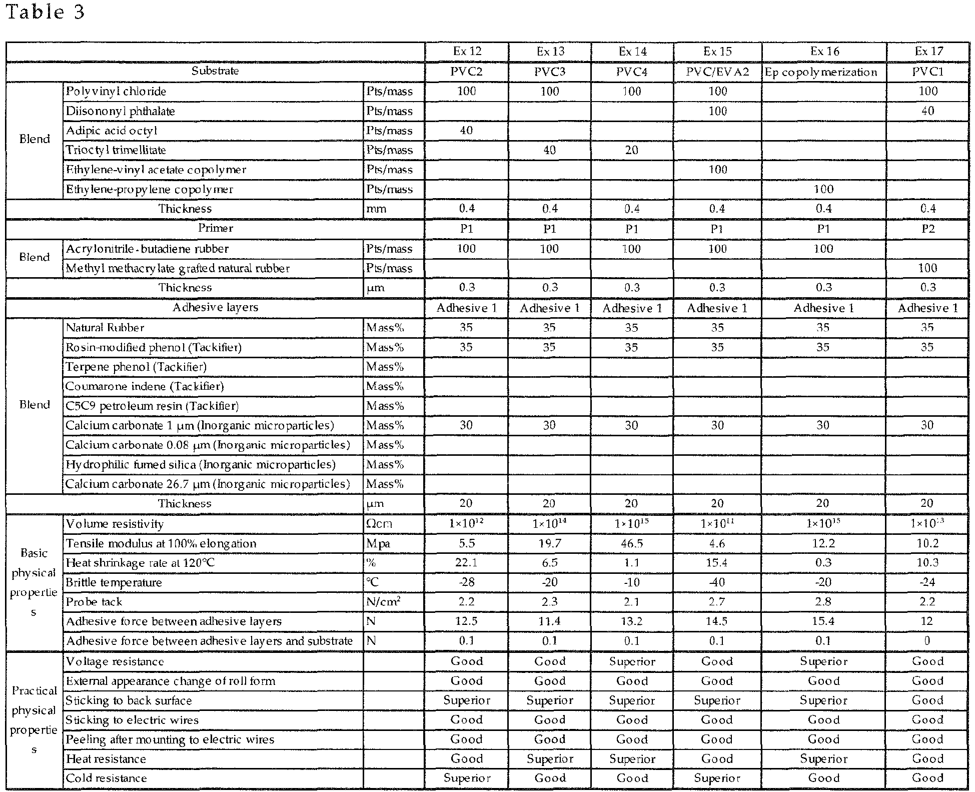

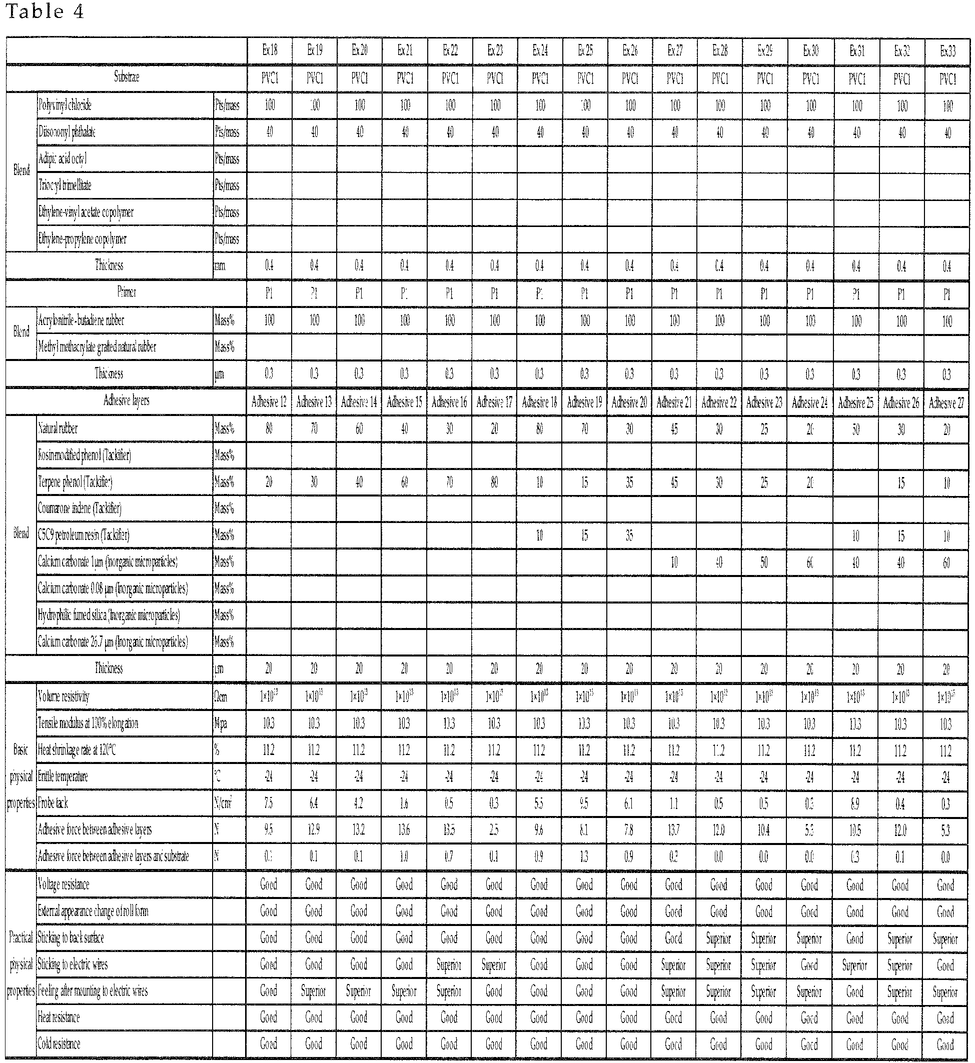

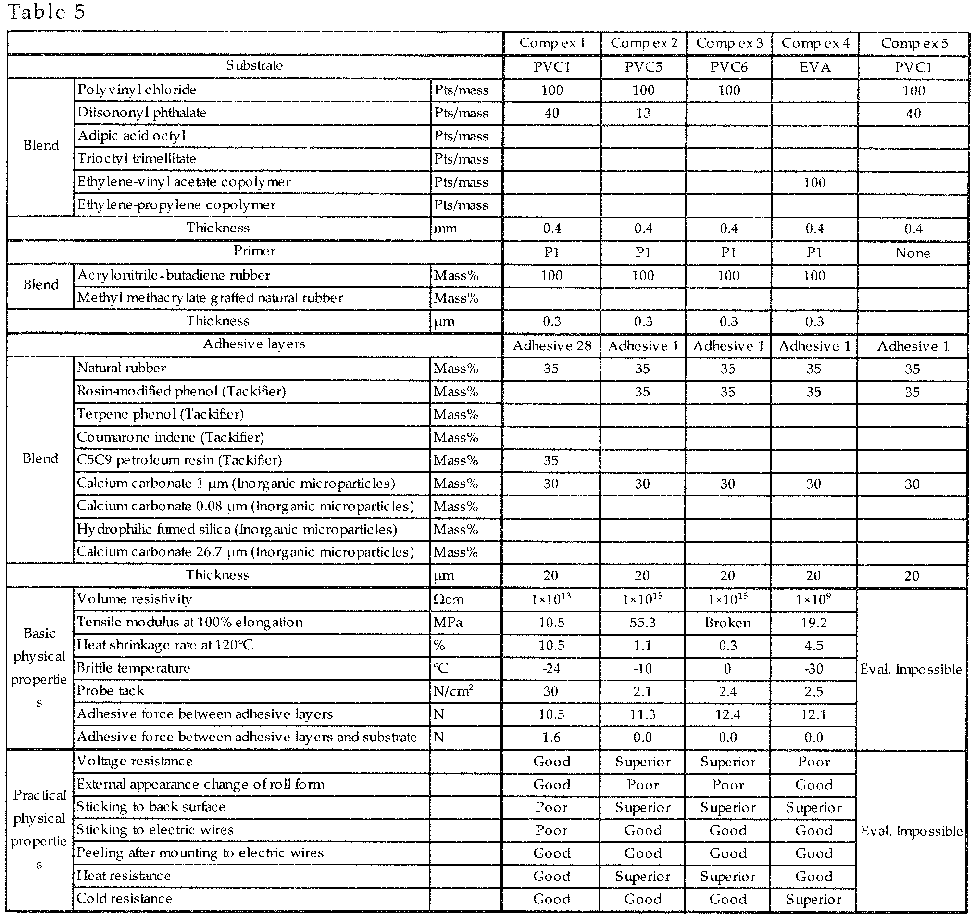

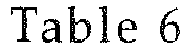

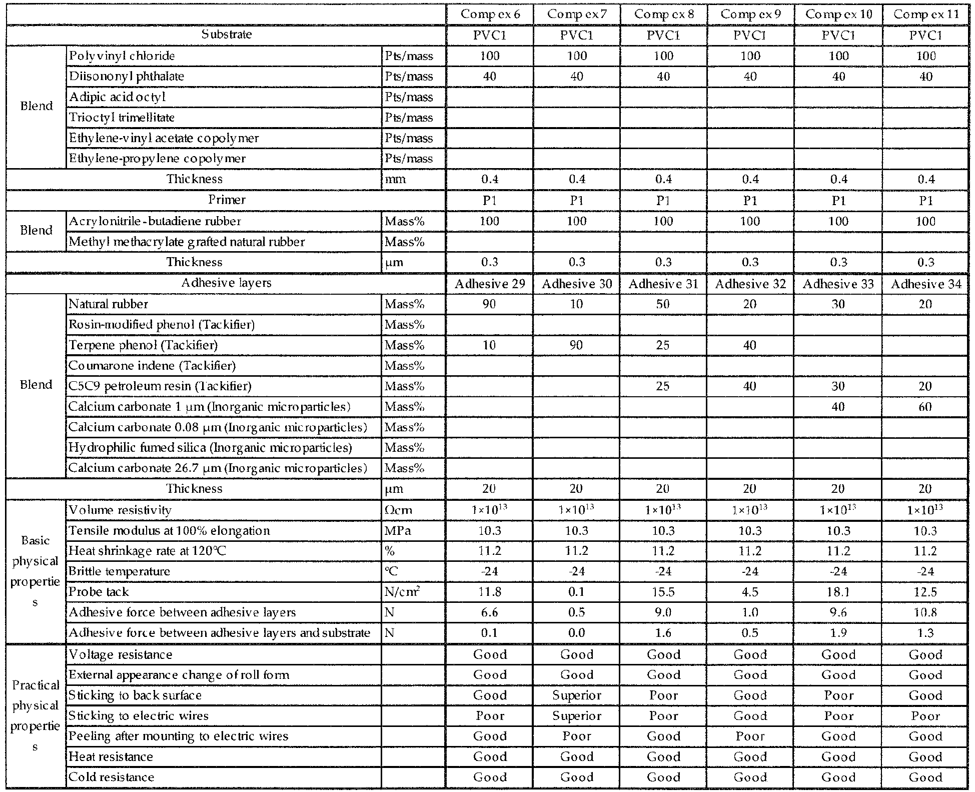

## Claims

1. An adhesive sheet comprising: a substrate and adhesive layers that are arranged on one surface of the substrate with a primer layer being interposed therebetween;
wherein the adhesive layers comprise a natural rubber (A) and a tackifier (B);
the adhesive sheet has a volume resistivity of 1×10¹⁰ Ω cm or more and a tensile modulus at 100% elongation of 50 MPa or less as determined in accordance with JIS K 6251;
the adhesive layers have a probe tack of 10 N/cm² or less as determined in accordance with ASTM D 2979;
the adhesive force between the adhesive layers having a width of 15 mm is 1.5 N or more;
and the adhesive force between the other surface of the substrate and the adhesive layers having a width of 15 mm is 1.5 N or less.

2. The adhesive sheet according to claim 1, wherein the adhesive layers comprise microparticles (C).

3. The adhesive sheet according to claim 1 or 2, wherein the adhesive layers comprise the natural rubber (A) at 25 mass% or more and 75 mass% or less and the tackifier (B) at 75 mass% or more and 25 mass% or less.

4. The adhesive sheet according to claim 2 or 3, wherein the adhesive layers comprise the microparticles (C) at an amount exceeding 0 mass% and 50 mass% or less.

5. The adhesive sheet according to any one of claims 1-4, wherein the tackifier (B) comprises a resin with a phenol structure and/or a coumarone structure.

6. The adhesive sheet according to any of claims 1-5, wherein the primer layer comprises acrylonitrile-butadiene rubber.

7. The adhesive sheet according to any one of claims 2-6, wherein the microparticles (C) have an average particle size of 0.1 µm or more and 20 µm or less.

8. The adhesive sheet according to any one of claims 2-7, wherein the microparticles (C) are calcium carbonate.

9. The adhesive sheet according to any one of claims 1-8, wherein a heat shrinkage rate in accordance with JIS K 7133 at 120° C is 20% or less.

10. The adhesive sheet according to any one of claims 1-9, wherein a brittle temperature in accordance with JIS K 7216 is -20°C or less.

11. The adhesive sheet according to any one of claims 1-10, wherein the substrate includes one or more selected from polyvinyl chloride (PVC), an ethylene-vinyl acetate copolymer (EVA), an ethylene-propylene copolymer, an ethylene-methyl methacrylate copolymer (EMMA), low-density polyethylene (LDPE), and a styrene-ethylene-butylene-styrene copolymer (SEBS).

12. A protective material for an elongated article, the protective material comprising the adhesive sheet according to any one of claims 1-11.

13. The protective material according to claim 12, wherein the elongated article is a bundle of electric wires.

14. A wire harness wherein a bundle of electric wires is bundled using the adhesive sheet according to any one of claims 1-11.
